(19) Europäisches Patentamt
European Patent Office
Office européen des brevets

(11) **EP 1 591 997 B1**

(12) **EUROPEAN PATENT SPECIFICATION**

(45) Date of publication and mention of the grant of the patent:
**24.02.2010 Bulletin 2010/08**

(21) Application number: **05009345.9**

(22) Date of filing: **28.04.2005**

(51) Int Cl.:
***G11B 7/007*** (2006.01)

(54) **Optical disc medium**

Optisches Plattenmedium

Support de disque optique

(84) Designated Contracting States:
**DE FR GB**

(30) Priority: **30.04.2004 JP 2004135047**

(43) Date of publication of application:
**02.11.2005 Bulletin 2005/44**

(73) Proprietor: **NEC CORPORATION**
**Tokyo (JP)**

(72) Inventor: **Yamanaka, Yutaka, c/o NEC Corporation**
**Tokyo (JP)**

(74) Representative: **Vossius & Partner**
**Siebertstraße 4**
**81675 München (DE)**

(56) References cited:
**EP-A- 1 089 264        EP-A- 1 460 621**
**US-A- 5 031 168        US-A- 5 883 878**
**US-A1- 2002 167 891**

**Description**

The present invention relates to an optical disc medium and, in particular, to an optical disc medium onto which control information such as address information is recorded and a recording type optical disc apparatus which is capable of detecting the control information recorded onto the optical disc medium by a fine optical spot.

In the optical disc field which performs record-reproduction of data by the fine optical spot, a CD-R (Compact Disc-Recordable) and a DVD-R (Digital Versatile Disc-Recordable) that are the optical discs capable of recording data have become widespread other than a reproduction-only ROM (Read Only Memory) medium on which an emboss-state data pit string is formed in advance. Further, there are also optical disc media called a CD-RW (CD-ReWritable) and a DVD-RW (DVD-ReWritable) which can rewrite previously recorded data. In the present application, a recording type optical disc medium is a generic name for the optical disc media capable of recording data.

The recording type optical disc medium is configured such that spiral shaped groove tracks for tracking are formed on an optical disc substrate and multilayered recording layers by organic materials are formed thereon. Data is recorded by concentrating high power laser beam on the recording layers of this optical disc and thereby altering in part to form recorded pits. After the data is recorded, substantially the same characteristic servo signal can be attained in a data format having the same configuration as that of the ROM medium on which the emboss-state data pit string is formed. Therefore, even in a reproduction-only drive device, there has an advantage in terms of the easy reproduction of data.

In such recording type optical disc medium, a recording operation is to be possible by adding recorded control information such as address information indicating a location in the groove track. As addition methods for recorded information, a wobble method has been known widely, which undulates the center of the groove finely in an orthogonal direction to a track at a constant frequency by a sine wave, a rectangular wave or the like (e.g., see non-patent document 1). For example, in a standard optical disc medium called a DVD+R which is a kind of the recording type optical discs, the recorded control information is added by providing a part of the constant-period wobble with phase reversal 180 degrees. As such, depending on the presence or absence of the phase inversion, 1, 0 of data are expressed.

Regarding conventional DVDs, there has been free from interference by adjacent tracks in such method. However, in next-generation DVDs, because a pitch among the adjacent tracks becomes narrower as compared to a recorded spot diameter of the optical disc apparatus, there arise problems. For example, in the previous DVDs, an adjacent track pitch is $0.74\mu m$ to the recorded spot diameter of approximately $0.9\mu m$, indicating the ratio of a little more than 80 percent. On the other hand, in the next-generation DVDs, the adjacent track pitch is $0.4\mu m$ to the recorded spot diameter of approximately $0.54\mu m$, which indicates the ratio is reduced down to a little more than 70 percent, thus becoming easier to be influenced by the interference from the adjacent tracks.

Consequently, when a wobble modulation area is provided on the track at the predetermined pitch like conventional, there occurs a part overlapping the adjacent wobble modulation areas in a track of a CLV (constant linear velocity) configuration with constant linear velocity. Therefore, a problem arises in deteriorating a recognition rate of the control information significantly in this area.

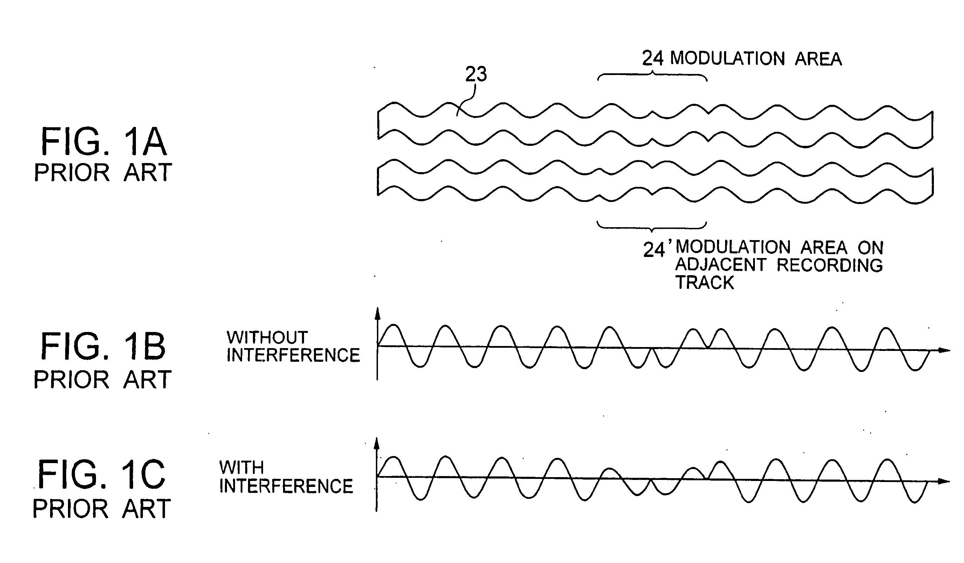

With reference to FIG. 1, the influence of this interference is described. FIG 1A shows an arrangement of a recording track 23 with a wobble. A modulation area 24 is provided for a part of the recording track and the phase of the wobble is reversed 180 degrees in a part thereof. The FIG. 1A shows a case where there is a position relationship overlapping a modulation area on adjacent recording track 24' with the modulation area 24.

FIG. 1B shows a waveform signal read in a state without interference where a favorable signal is detected from the modulation area 24. In contrast, FIG. 1C shows a state with interference where the waveform signal detected from the modulation area 24 becomes deformed significantly.

Although the illustrated examples show influences from one side of the adjacent tracks, in a spiral shaped track position of the actual optical disc medium, the influences are to be more serious by the interference from both sides of the adjacent tracks.

As the addition method for the recorded control information, there might be a method using land prepits such as used in the DVD-R. However, although a wobble frequency can be an adequately low frequency to the frequency for the recorded data, the land prepits are unable to form longer for inhibiting a recorded data signal. Accordingly, there is a fault in that the detection is to be difficult because detection is needed at the frequency close to that of the recorded data.

Non-Patent Document 1: "New Book of Optical Disc for the Next Generation" Nikkei BP, October 7, 2003, pp. 99-116.

EP-A-1 460 621 relevant under Article 54(3), relates to an optical disc medium having optical spots used for recording and reproducing information and an optical disc apparatus for performing the recording and reproducing. The optical disc medium has a spiral recording track. The recording track is divided into a plurality of address segments with a predetermined address-segment length. A format modulation area is formed at a predetermined position in each of the address segments so as to overlap the recording track.

US 5,883,878 discloses a multi-layered optical disc comprising a plurality of recording layers accumulated in the thickness direction. The recording layers each have an identification section storing an address of the recording layer which the identification section belongs to.

US 6,038,209 describes an optical disc having a recording plane with a spiral first track and a spiral second track. Said first and second spiral tracks are suitable for recording and reproducing information. Therein, the first and second tracks record information in different modulation methods.

It is an object of the present invention to provide an optical disc medium capable of detecting a wobble modulation signal without interference caused by adjacent tracks even if adjacent track pitches decrease and the ratio of the adjacent track pitches to the recorded spot diameter decline. This object is achieved by the subject-matter of claim 1.

In order to achieve the abovementioned object, the present invention is provided with a recordable optical disc medium on which a recording track in a spiral shape is formed, wherein a predetermined length of an information addition area is provided for every control information addition unit separating the recording track by a predetermined length L and the information addition area is arranged so as to be equal to or greater than a predetermined distance apart in a recording track direction between the adjacent recording tracks in the radial direction and not to overlap with each other between adjacent recording tracks in a radial direction.

Then, the length of the information addition area is preferably to be less than 25 percent of the L and the information addition area is selectively arranged in either a first arrangement or a second arrangement where the positions differ by substantially one-half length within the control information addition unit.

Also, a periodic wobble is preferably formed on the recording track, the information addition area is provided with information by modulating a phase of the wobble, and the information addition area between the adjacent recording tracks is arranged equal to or greater than one wobble period apart in the recording track direction.

Furthermore, the periodic wobble is preferably formed on the recording track, the information addition area is provided with information by modulating the phase, assuming the wobble having plural periods as one unit, and the information addition area among the adjacent recording tracks is arranged equal to or greater than one unit apart in the recording track direction.

In addition, an optical disc apparatus for carrying out recording and reproduction to the above optical disc medium is described. The apparatus comprises an access unit for irradiating laser beam to the optical disc medium for recording and reproduction and a disc controller for controlling the access unit, wherein the optical disc apparatus is capable of detecting the control information recorded on the information addition area.

Then, preferably, in the disc controller, provided are a pre-control information detecting unit, a clock detection unit and a window generating circuit for forming a window which opens in a case the information of the information addition area for the optical disc medium is detected, wherein a detection signal output from the pre-control information detecting unit according to control information is extracted via the window.

According to the present invention, the interference between the adjacent tracks is eliminated because the information addition area into which address information and the like are written is arranged so as to be equal to or greater than a prescribed distance apart in the recording track direction between the adjacent recording tracks in the radial direction and so as not to overlap with each other between the adjacent recording tracks in the radial direction and even in the optical disc medium with narrow tracks, stable detection for the recorded control information becomes possible.

FIG. 1 is a diagram for explaining problems of conventional techniques;

FIG. 2 is a block diagram showing a data recording system having an optical disc apparatus and an optical disc medium of the present invention;

FIG. 3 is a block diagram showing a configuration of an embodiment of the optical disc apparatus for the present invention;

FIG. 4 is a diagram for explaining characteristics of an optical disc;

FIGS. 5A-5E are diagrams for explaining principle of the present invention;

FIGS. 6A, 6B are explanatory diagrams for explaining a case where distance is kept in a modulation area between adjacent tracks on the optical disc medium of the present invention;

FIG. 7 is an explanatory diagram of a case where a window is provided for a wobble phase information detecting unit of the optical disc apparatus of the present invention;

FIG. 8 is a plan view of the optical disc medium for explaining an embodiment 1 of the present invention;

FIG. 9 is an explanatory diagram of the optical disc medium for the embodiment 1 of the present invention;

FIG. 10 is an explanatory diagram of the optical disc medium for an embodiment 2 of the present invention; and

FIG. 11 is a partial block diagram of an optical disc apparatus.

Hereinafter, the principle of the optical disc medium and optical disc apparatus of the present invention and the configuration of preferred embodiments are described with reference to the attached drawings.

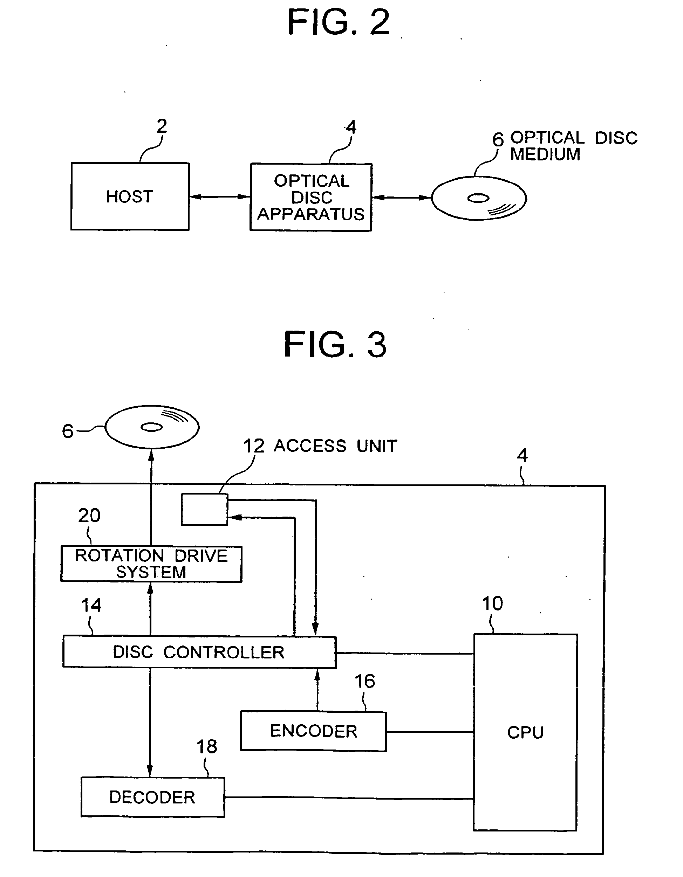

FIG. 2 is a diagram showing a configuration of a data recording system in which an optical disc medium and an optical disc apparatus according to an embodiment of the present invention are used. An optical disc apparatus 4 is so configured that an optical disc medium 6 such as a DVD disc is set and then records data onto the optical disc medium 6 in accordance with an order from a host 2 and reads the data from the optical disc medium 6. In addition, there might be a case that the optical disc apparatus 4 executes a training processing for confirming and adjusting writing conditions in response to the order from the host 2 before writing the dada into the optical disc medium 6.

FIG. 3 is a block diagram of the optical disc apparatus 4 according to a configuration of an embodiment of the present invention. As shown in the FIG. 3, the optical disc apparatus 4 includes a CPU 10, an access unit 12, a disc controller 14, an encoder 16, a decoder 18 and a rotation drive system 20.

The CPU 10 controls the entire operations of the optical disc apparatus 4. The CPU 10 performs a necessary computation as well as exchanging orders, notification and data between the host 2 and controlling the disc controller 14, the encoder 16 and the decoder 18.

The access unit 12 writes data into the optical disc medium 6 by using laser beam under the control of the disc controller 14 and also reads the data from the optical disc medium 6 and outputs to the disc controller 14. As the access unit 12, a general configuration is adopted for use. When the optical disc medium 6 is set under the control by the disc controller 14, in response to the input order, the rotation drive system 20 drives so as to rotate the optical disc medium 6.

Based on access information of information addition areas provided for every control information addition unit on the optical disc medium which is to be discussed later, the disc controller 14 controls the access unit 12 and the rotation drive system 20 in order for the optical disc medium 6 to execute a rotation control, laser control and read/write of data. To be specific, the disc controller 14 controls the rotation drive system 20 in accordance with an order from the CPU 10 and rotatably drives the optical disc medium 6. Moreover, the disc controller 14 controls the operations of the access unit 12 in write mode and read mode in accordance with the order from the CPU 10. In other words, in the write mode, the disc controller 14 controls the access unit 12 so as to write data supplied from the encoder 16 into the optical disc medium 6. In the read mode, the disc controller 14 controls the access unit 12 in order to read data from the optical disc medium 6. The disc controller 14 supplies the decoder 18 with the data which has been read from the access unit 12.

The encoder 16 executes an encode processing to user data in response to the order from the CPU 10 and generates write data of an ECC (error correcting code) block (16 sectors or 32 sectors) unit. The encoder 16 supplies the disc controller 14 with the generated write data.

In response to the order from the CPU 10, the decoder 18 executes a decode processing of data which has been read from the optical disc medium 6 in the ECC block (16 sectors or 32 sectors) unit.

In the writing operation, first the access unit 12 reads recorded control information which has been formed from wobbles or the like on a track and then outputs the recorded control information to the disc controller 14. The disk controller 14 outputs the recorded control information from the access unit 12 to the CPU 10. The CPU 10 executes a computation processing based on the recorded control information from the disc controller 14, requests for access information to the information addition area and outputs that access information to the disc controller 14. The CPU 10 outputs the user data to the encoder 16 when outputting the access information. The encoder 16 executes the encoding processing to the user data and outputs that data to the disc controller 14.

Upon the receipts of the access information from the CPU 10 and the encode-processed user data from the encoder 16, the disc controller 14 allows the access unit 12 to access to a specific information addition area on the optical disc medium 6 which has been rotatably driven by the rotation drive system 20 and then the access unit 12 writes the user data into the information addition area.

By the optical disc apparatus of the present invention, reading of this recorded control information can be realized stably.

In order to solve the problems of the conventional techniques, a modulation area (information addition area) of the optical disc medium could be arranged so as not to overlap the modulation area (information addition area) having control information among adjacent recording tracks. The area where a wobble signal of a single period exists is only for extracting a clock signal synchronizing to a wobble waveform even if disturbance of the waveform for a reproduction signal occurs by mutual interference in the modulation area of the adjacent recording tracks. Therefore, influences upon a reproduction characteristic can be suppressed to the minimum as compared to the case of the mutual interference in the modulation area having the control information.

Accordingly, the embodiments of the present invention are made to avoid the overlap of the modulation areas having the control information on the recording track.

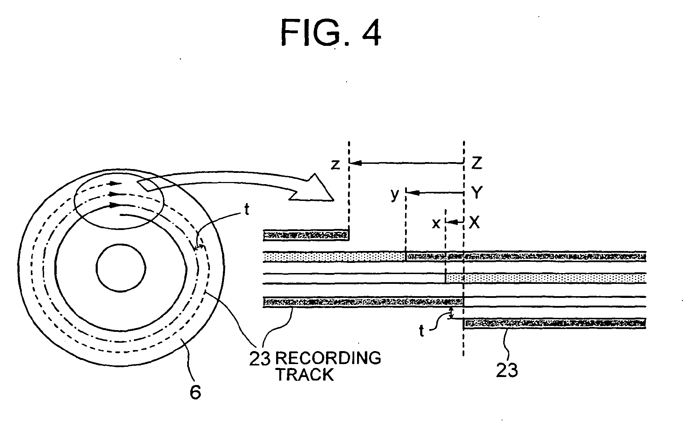

An embodiment of the present invention which avoids the overlap of the modulation areas having the control information on the recording track is described based on the drawing. FIG. 4 shows a configuration of the spiral shaped optical disc medium. The spiral shaped recording track 23 is formed with a substantially constant track pitch, t, on the optical disc medium 6. Subsequently, the wobbles are formed periodically on the recording track 23 and for every control information addition unit separated by a predetermined length L, a prescribed length of the modulation areas (information addition area) are provided.

As shown in the FIG. 4, because the optical disc medium 6 is a disc-like shape, the lengths of the recording tracks at one rotation become longer with getting closer to the outer circumferential side in order of a continuous line, a chain line and a dashed line. The right side of the drawing illustrates the state into which the lengths seen from a specific radius position change.

Assuming the length of a period for a certain rotation (rotation of the innermost part in the drawing) as a reference length, a circular radius becomes large by t in the next rotation and then a terminal position x shifts to the left direction by X=2Πt, reflecting the length of the rotation becomes long. Further, with one rotation starting from this position, a terminal position y shifts by Y=X+4Πt. In the next rotation, a terminal position z shifts by Z=Y+6nt. In this manner, with getting closer to the outer circumference, the terminal positions shift to the left direction.

When the x position is seen as the reference, the shift length of a terminal position is 2nt to the right in an inner circumferential side and 4nt to the left in an outer circumferential side. When the y position is seen as the reference, the shift length of the terminal position is 4nt to the right in the inner circumferential side and 6nt to the left in the outer circumferential side. The shift of the terminal positions among the adjacent tracks expands as getting closer to the outer circumference. To generalize, this relationship indicates that the outer circumferential side is sifted to the left by $\alpha+2\Pi t$ when the inner circumferential side is shifted to the right by $\alpha$.

Also, this relationship can be applied to an address segment which divides a recording track by a constant length L to establish as a unit for embedding the recorded control information. To an address segment, if the address segment of the inner circumferential side is shifted to the right by $\alpha$, the address segment of the outer circumferential side is arranged so as to be shifted to the left by $\alpha+2\Pi t$.

Because t is a recording track pitch having an approximate value of $0.74\mu m$ in the previous DVDs and further $0.4\mu m$ in the high-density recording of the next generation DVDs, the difference, 2nt, of the shift length is approximately several micrometers. In contrast, the address segment has a length of 10mm or so since if the length is too short, it is difficult to handle for the increase of the address information. Where, dividing the address segment into several tens of pieces as sub-units, the modulation area is provided for each of the sub-units, one sub-unit has also the length of several hundreds of micrometers or more.

Accordingly, in the following description which discusses the position relationship of the address segments or the sub-units, regarding the inner circumferential side and outer circumferential side as being shifted to the opposite side for each by the same length, relatively small differential length can be ignored.

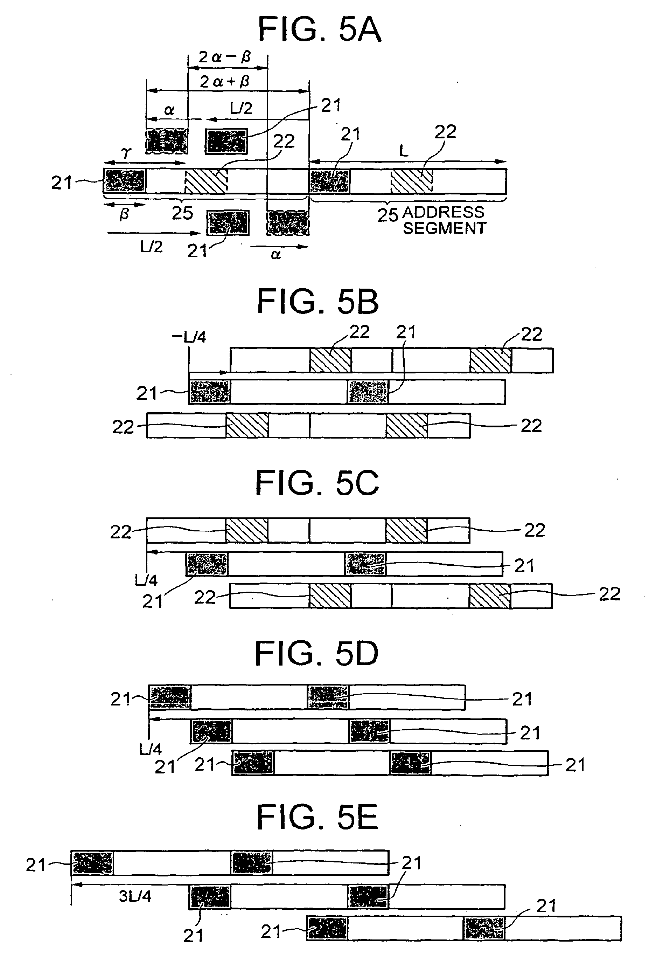

FIG. 5A shows a relationship between an address segment configuration and adjacent format modulation areas according to an embodiment of the present invention. As shown in the FIG. 5A, the address segment 25, an example of the control information addition unit separated by the predetermined length, is configured such that a first modulation area 21 at the head and a second modulation area 22 at the γ position from the head are provided respectively.

First, when the first modulation area 21 of the address segments 25 is selected, assume that the address segment 25 with the inner circumferential side and the outer circumferential side on the adjacent recording tracks are shifted by $\pm L/2$ one another in the recording track direction. From this positional state, tracing the address segments 25 of the adjacent recording tracks to the outer circumferential side in turn, the modulation area 21 of the address segment 25 in the inner circumferential side is shifted to the right and the modulation area 21 of the address segment 25 in the outer circumferential side to the left for each by the equivalent length. Under the condition that the address segments 25 with the inner circumferential side and the outer circumferential side on the adjacent recording tracks are shifted one another by $\pm L/2$, the shift length $\alpha$ and the length $\beta$ of the modulation area 21 satisfy $\alpha+\beta=L/2$.

In this case, in the vicinity of the second modulation area 22 sandwiched by the two of the first modulation areas 21, 21 of the consecutive address segments 25, the space having $2\alpha$-$\beta$ exists. In this space, the first modulation areas 21 of the address segment 25 of the adjacent recording track do not exist so as to be overlapped. Consequently, if setting the length of the space for $2\alpha$-$\beta$ to be equal to or greater than the length $\beta$ of the first modulation area 21, in this space, the phase of the wobble can be reversed 180 degrees from the first modulation area 21 to the second modulation area 22 within the address segment 25. Furthermore, even if the modulation area (21 or 22) of the adjacent recording track is shifted to the right or left, it is possible to avoid overlapping between the first modulation areas 21 or between the second modulation areas 22.

Consequently, β which satisfies the following two equations can be found:

$$\alpha+\beta=L/2 \qquad (i)$$

$$2\alpha-\beta>\beta \qquad (ii)$$

therefore,

$$L/4>\beta \qquad (iii)$$

From this, if the length β of the modulation area (21 or 22) is smaller than 25 percent of the length L of the address segment, the area where modulation areas of the adjacent recording tracks do not overlap can be kept for both the first modulation area 21 and the second modulation area 22.

The position γ of the second modulation area 22 may be within blank space existing between the adjacent first modulation areas 21 after moved by $\alpha$ to the right or left, therefore, the equation below can be satisfied.

$$\gamma > \beta + \beta \qquad (iv)$$

$$\gamma + \beta < L - \beta \qquad (v)$$

therefore,

$$2\beta < \gamma < L - 2\beta \qquad (vi)$$

If $\beta = L/4$, then $\gamma = L/2$, indicating that the second modulation area 22 is determined to be a point $\gamma$ at the middle of the length L for the address segment.

Under limit conditions shown as $\beta = L/4$ and $\gamma = L/2$, the relationship between the positions of the adjacent address segments and how the selection of the modulation area changes will be described with reference to the drawings. Hereinafter, in the description, the shift to the right direction at the outer circumferential side is represented as a minus sign and the shift to the left direction is represented as a positive sign. The relative position relationship among the adjacent recording tracks to the shift length changes periodically with the address segment length L. Hence, even if starting from any value, all cases of positional conditions would be covered by examining only one cycle L.

FIG. 5B shows a case the first modulation areas 21 of one side of the adjacent address segments 25 and the second modulation areas 22 of another side of the address segments 25 exist, having the shift length of - L/4. In this arrangement, the first modulation areas 21 and the second modulation areas 22 of the address segments 25 of the adjacent recording tracks exist alternately.

FIG. 5C shows a case the first modulation areas 21 of one side of the adjacent address segments 25 and the second modulation areas 22 of another side of the address segments 25 exist, having the shift length of L/4. Regarding the case of the FIG. 5C, in the range of the shift length from -L/4 to L/4, the first modulation areas 21 and the second modulation areas 22 are arranged alternately in the range of the address segment length for the adjacent recording tracks.

In the cases of FIG. 5B and 5C, explained are when the first modulation areas 21 of one side of the adjacent address segments 25 and the second modulation areas 22 of another side of address segments 25 are arranged alternately, however, it is not limited to this.

As shown in FIG. 5D, the first modulation areas 21 of one side of the adjacent address segments 25 and the first modulation areas 21 of another side of the address segments 25 may be exist, having the shift length of L/4. In this case, the second modulation areas 22 of one side of the adjacent address segments 25 and the second modulation areas 22 of another side of the address segments 25 may be exist, having the shift length of L/4.

As shown in FIG. 5E, the first modulation areas 21 of one side of the adjacent address segments 25 and the first modulation areas 21 of another side of the address segments 25 may be exist, having the shift length from L/4 to 3L/4. In this case, the second modulation areas 22 of one side of the adjacent address segments 25 and the second modulation areas 22 of another side of the address segments 25 may be exist, having the shift length of L/4 to 3L/4.

Furthermore, determining the shift length of 3L/4 as a border, assuming 3L/4= - L/4, the arrangement changes to the one of the modulation area shown in the FIG. 5B.

In this manner, it is understood that the modulation areas (21, 22) of the address segments 25 of the adjacent recording tracks can be so configured as not to overlap from one another over a single period for the shift length. For the cases of the FIG. 5D to 5E, the arrangement by the address segments of the second modulation areas 22 only is also selectable.

The mentioned above has been given under a boundary condition where the lengths of the modulation areas 21, 22 of the address segments 25 are 25 percent for the length L of the address segments 25 and the position shift of the first and the second modulation areas is L/2, however, it is not limited to this.

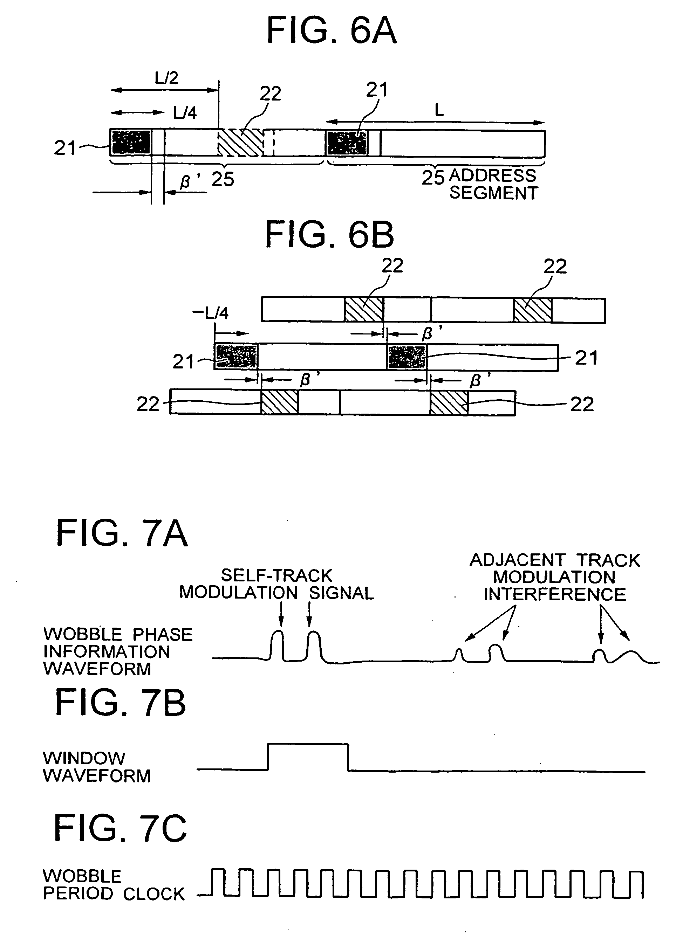

As shown in FIG. 6A, fixing the position shift $\gamma$ between the first modulation area 21 of one side of the adjacent address segment 25 and the second modulation area 22 of the other side of the address segment 25 as substantially L/2, the length $\beta$ of the first modulation area 21 may be shortened by $\beta'$ from L/4. In this case, assume that the position where the first modulation area 21 and the second modulation area 22 are reversed 180 degrees is L/4 unit and does not change. As shown in the FIG. 6B, for example, even in the condition that the modulation areas in the adjacent tracks are close the most, the distances for the termination and the beginning of the modulation areas 21, 22 can be apart by $\beta'$ in the track direction. That is to say, the minimum value of the distance between a self-track modulation area to the adjacent track modulation area could be kept by $\beta'$.

As a method which stably detects a signal from the self-track modulation area without adjacent influences, it is considered to set a window for detecting at the timing of the occurrence of the modulation area and, in the other areas, to use a circuit which does not detect the signal.

FIG. 7 is an example of operation waveforms for such circuit. It allows a wobble phase information waveform (a) extracted from the wobble waveform of the optical disc medium to generate a window waveform (b) assumed by a detection position of the modulation area in the past. Detecting the phase signal within the window only enables to suppress the influences of the interference. Controlling a wobble period clock (c) synchronizing with the wobble signal stabilizes the window waveform (b).

With respect to such detecting method, considering the lag of a wobble detection clock or the shift of the setting for the window waveform, it is desirable for the widths of the self-track modulation signal and the window waveform to have a margin of relatively one wobble period at least.

As such, it would be effective to set the appropriate width for the modulation area and to keep a distance equal to or greater than one wobble period among the adjacent modulation areas.

Moreover, not for every one wobble period for the phase modulation but when the phase modulation is executed by setting the wobble unit at three or four, several wobbles of the time shift may occur as a phase detecting signal. In such case, as a detecting margin, keeping this several wobbles of the modulation unit for the distance among the modulation areas achieves more stable detection.

EXAMPLE 1

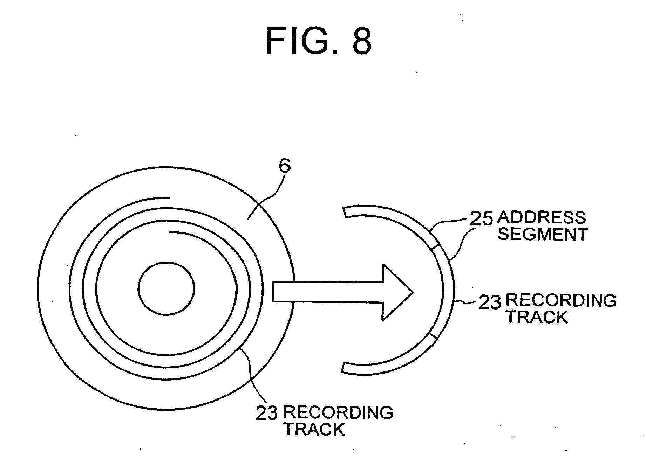

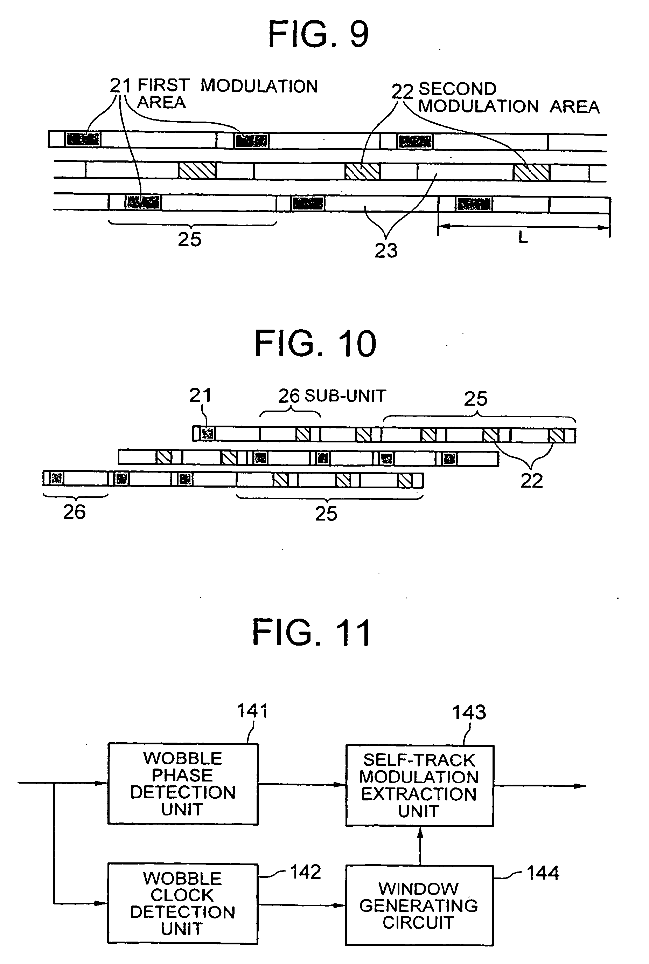

As shown in FIG. 8, the recording track 23 on the optical disc medium 6 is provided with the predetermined length of the address segments 25. In FIG. 9, three address segments of a recording track are shown together with the address segments of the adjacent tracks. In this embodiment, the first modulation area 21 and the second modulation area 22 are placed on each of the address segments 25 and are selected such that any of the modulation areas does not overlap among the adjacent recording tracks but to keep a prescribed distance.

EXAMPLE 2

In this embodiment, as shown in FIG. 10, the address segments 25 are divided into a plurality of sub-units 26 where the first modulation areas 21 and the second modulation areas 22 are set for each of the sub-units. If the length of the modulation area is set optimally, the arrangement in which a predetermined distance apart could be selected as described in the EXAMPLE 1.

For example, assume that the phase modulations in the two values at 0 degree, 180 degrees are executed by four wobble units where a unit length is 84 wobbles as the sub-unit. Keeping the modulation area of 16 wobbles at one sub-unit, four bits of data can be stored. If the head bit is fixed as the 180 degree phase bits for detecting a position, three bits of data for the recording control can be stored.

The first modulation area 21 and the second modulation area 22 are set at the head within the sub-unit and at the position of 42 wobbles from the head respectively. Because the 25 percent length of the sub-unit is to be 21 wobbles, the 16 wobbles of the modulation area length become smaller by five wobbles. Thus, it is possible to select the first and the second areas at the minimum pitch equal to or greater than four wobbles of the modulation unit.

EXAMPLE 3

FIG. 11 is a block diagram of an extraction circuit for the modulation signal which is laid out on the disc controller 14 of the optical disc apparatus shown in the FIG. 3. The wobble detecting signal from the access unit 12 is input to a wobble phase detection unit 141 and a wobble clock detection unit 142 of the disc controller 14 thereby forming a phase modulation waveform and a clock waveform. From information of this clock waveform and the previous modulation area position, a window timing signal of the self-track modulation area is generated by a window generating circuit 144. By using this timing signal and a phase output, the self-track modulation signal (the self-track modulation signal in the FIG. 7) is extracted in a self-track modulation extraction unit 143.

It is also possible to use other methods such as the selection by the window signal after reproducing information data from the phase signal.

As described above, according to the present invention, the interference is eliminated among adjacent tracks so that it is possible to detect recording control information stably even in the optical disc medium of narrow tracks.

**Claims**

1. A recordable optical disc medium (6) on which a recording track (23) in a spiral shape is formed, wherein a predetermined length β of an information addition area (21,22) is provided for every control information addition unit (25) separating the recording track (23) along the track direction by a predetermined length L; and

   the information addition area is arranged so as to be more than a prescribed distance apart in a recording track direction between adjacent recording tracks in the radial direction and neither to overlap with nor to adjoin to the respective area of the adjacent recording tracks in a radial direction,

   wherein the information addition area is selectively arranged in a first modulation area (21) and or a second modulation area (22) where a position thereof differs by substantially one-half length of the length L within the control information addition unit, and

   wherein the predetermined length β of the information addition area is set to be less than 25 percent of the length L and a position of the information addition area is thereby shifted along the recording track direction.

2. The optical disc medium, as claimed in claim 1, wherein a plurality of the information addition areas (21, 22) are provided within the control information addition unit (25) and the information addition area positioned within the control information addition unit of adjacent recording tracks is arranged so as to shift a position to the recording track direction.

3. The optical disc medium as claimed in claim 1 or 2, wherein a periodic wobble is formed on the recording track, the information addition area (21, 22) is provided with information by modulating a phase of the wobble, and the information addition area between adjacent recording tracks is arranged equal to or greater than one wobble period apart in the recording track direction.

4. The optical disc medium as claimed in any one of claims 1 to 3 wherein a periodic wobble is formed on the recording track, the information addition area (21, 22) is provided with information by modulating a phase, making the wobble having plural periods to be as one unit, and the information addition area between the adjacent recording tracks is arranged equal to or greater than one unit apart in the recording track direction.

5. The recordable optical disc medium according to claim 1, wherein a periodic wobble is formed on the recording track; and the prescribed distance is a wobble period.

6. The recordable optical disc medium according to claim 5, wherein the information addition area (21, 22) is selectively arranged with a first modulation area and/or a second modulation area where a position thereof differs by substantially one-half length of the L within the control information addition unit (25).

**Patentansprüche**

1. Beschreibbares optisches Plattenmedium (6), auf dem eine spiralförmige Schreibspur (23) ausgebildet ist, wobei eine vorbestimmte Länge β einer Informationsaufnahmefläche (21, 22) für jede Steuerinformationsaufnahmeeinrichtung (25) vorgesehen ist, die die Schreibspur (23) entlang der Spurrichtung durch eine vorbestimmte Länge L separiert; und die Informationsaufnahmefläche derart angeordnet ist, dass sie in einer Schreibspurrichtung um mehr als eine vorgeschriebene Strecke zwischen benachbarten Schreibspuren in der Radialrichtung beabstandet ist, und in einer radialen Richtung weder überlappt mit noch angrenzt an der jeweiligen Fläche der benachbarten Schreibspuren, wobei die Informationsaufnahmefläche selektiv in einer ersten Modulationsfläche (21) und/oder einer zweiten Modulationsfläche (22) angeordnet ist, wo sich eine Position darauf durch im Wesentlichen eine Hälfte der Länge L innerhalb der Steuerinformationsaufnahmeeinrichtung unterscheidet, und wobei die vorbestimmte Länge β der Informationsaufnahmefläche derart eingestellt ist, dass sie weniger als 25 % der Länge L beträgt und eine Position der Informationsaufnahmefläche dadurch entlang der Schreibspurrichtung verschoben ist.

2. Optisches Plattenmedium nach Anspruch 1, wobei mehrere der Informationsaufnahmeflächen (21, 22) innerhalb der Steuerinformationsaufnahmeeinrichtung (25) vorgesehen sind und die Informationsaufnahmefläche innerhalb der Steuerinformationsaufnahmeeinrichtung von benachbarten Schreibspuren derart positioniert ist, um eine Position in Schreibspurrichtung zu verschieben.

3. Optisches Plattenmedium nach Anspruch 1 oder 2, wobei eine periodische Planlaufabweichung auf der Schreibspur ausgebildet ist, die Informationsaufnahmefläche (21, 22) mit Informationen durch Modulieren einer Phase der Planlaufabweichung versehen ist, und die Informationsaufnahmefläche zwischen benachbarten Schreibspuren gleich oder größer als eine Planlaufabweichungsperiode in Schreibspurrichtung auseinander angeordnet ist.

4. Optisches Plattenmedium nach einem der Ansprüche 1 bis 3, wobei eine periodische Planlaufabweichung auf der Schreibspur ausgebildet ist, die Informationsaufnahmefläche (21, 22) mit Informationen durch Modulieren einer Phase versehen ist, so dass die Planlaufabweichung mehrere Perioden als eine Einheit aufweist und die Informationsaufnahmefläche zwischen den benachbarten Schreibspuren gleich oder größer als eine Einheit in Schreibspurrichtung auseinander angeordnet ist.

5. Beschreibbares optisches Plattenmedium nach Anspruch 1, wobei eine periodische Planlaufabweichung auf der Schreibspur ausgebildet ist und der vorgeschriebene Abstand eine Planlaufabweichungsperiode ist.

6. Beschreibbares optisches Plattenmedium nach Anspruch 5, wobei die Informationsaufnahmefläche (21, 22) selektiv mit einer ersten Modulationsfläche und/oder einer zweiten Modulationsfläche versehen ist, wobei sich eine Position darauf durch im Wesentlichen eine Hälfte der Länge L innerhalb der Steuerinformationsaufnahmeeinrichtung (25) unterscheidet.

**Revendications**

1. Support de disque optique enregistrable (6) sur lequel une piste d'enregistrement (23) en forme de spirale est formée, dans lequel
   une longueur prédéterminée β d'une zone d'ajout d'informations (21, 22) est prévue pour chaque unité d'ajout d'informations de commande (25) séparant la piste d'enregistrement (23) le long de la direction de piste d'une longueur prédéterminée L ; et
   la zone d'ajout d'informations est agencée de sorte à se trouver à plus d'une distance prescrite, dans une direction de piste d'enregistrement, entre des pistes d'enregistrement adjacentes dans la direction radiale et sans chevaucher ni être attenante à la zone respective de pistes d'enregistrement adjacentes dans une direction radiale,
   dans lequel la zone d'ajout d'informations est sélectivement agencée dans une première zone de modulation (21) et/ou une seconde zone de modulation (22) où une position de celle-ci diffère de sensiblement une moitié de la longueur L dans l'unité d'ajout d'informations de commande, et
   dans lequel la longueur prédéterminée β de la zone d'ajout d'informations est fixée pour être inférieure à 25 pour cent de la longueur L et une position de la zone d'ajout d'informations est ainsi décalée le long de la direction de piste d'enregistrement.

2. Support de disque optique selon la revendication 1, dans lequel une pluralité des zones d'ajout d'informations (21, 22) est prévue dans l'unité d'ajout d'informations de commande (25) et la zone d'ajout d'informations positionnée dans l'unité d'ajout d'informations de commande de pistes d'enregistrement adjacentes est agencée de façon à décaler une position vers la direction de piste d'enregistrement.

3. Support de disque optique selon la revendication 1 ou 2, dans lequel une ondulation périodique est formée sur la piste d'enregistrement, la zone d'ajout d'informations (21, 22) est alimentée en informations en modulant une phase de l'ondulation, et la zone d'ajout d'informations entre des pistes d'enregistrement adjacentes est agencée à une distance supérieure ou égale à une période d'ondulation dans la direction de piste d'enregistrement.

4. Support de disque optique selon l'une quelconque des revendications 1 à 3, dans lequel une ondulation périodique est formée sur la piste d'enregistrement, la zone d'ajout d'informations (21, 22) est alimentée en informations en modulant une phase, faisant de l'ondulation comportant plusieurs périodes une seule unité, et la zone d'ajout d'informations entre les pistes d'enregistrement adjacentes est agencée à une distance supérieure ou égale à une unité dans la direction de piste d'enregistrement.

5. Support de disque optique enregistrable selon la revendication 1, dans lequel
   une ondulation périodique est formée sur la piste d'enregistrement ; et la distance prescrite est une période d'ondulation.

6. Support de disque optique enregistrable selon la revendication 5, dans lequel la zone d'ajout d'informations (21, 22) est sélectivement agencée avec une première zone de modulation et/ou une seconde zone de modulation où une position de celle-ci diffère de sensiblement une moitié de la longueur L dans l'unité d'ajout d'informations de commande (25).

**FIG. 1A**
PRIOR ART

24 MODULATION AREA

23

24' MODULATION AREA ON ADJACENT RECORDING TRACK

**FIG. 1B**
PRIOR ART

WITHOUT INTERFERENCE

**FIG. 1C**
PRIOR ART

WITH INTERFERENCE

EP 1 591 997 B1

# FIG. 2

2 HOST

4 OPTICAL DISC APPARATUS

6 OPTICAL DISC MEDIUM

# FIG. 3

6

12 ACCESS UNIT

4

20 ROTATION DRIVE SYSTEM

14 DISC CONTROLLER

16 ENCODER

18 DECODER

10 CPU

# FIG. 4

23 RECORDING
TRACK

6

23

# FIG. 5A

# FIG. 5B

# FIG. 5C

# FIG. 5D

# FIG. 5E

# FIG. 6A

# FIG. 6B

# FIG. 7A

WOBBLE PHASE
INFORMATION
WAVEFORM

SELF-TRACK
MODULATION SIGNAL

ADJACENT TRACK
MODULATION
INTERFERENCE

# FIG. 7B

WINDOW
WAVEFORM

# FIG. 7C

WOBBLE
PERIOD CLOCK

# FIG. 8

6

25 ADDRESS
SEGMENT

23 RECORDING
TRACK

23 RECORDING
TRACK

# FIG. 9

21 FIRST MODULATION AREA

22 SECOND MODULATION AREA

25

23

L

# FIG. 10

21

26 SUB-UNIT

25

22

26

25

# FIG. 11

| 141 | | 143 |
|---|---|---|
| WOBBLE PHASE DETECTION UNIT | | SELF-TRACK MODULATION EXTRACTION UNIT |

| 142 | 144 |
|---|---|
| WOBBLE CLOCK DETECTION UNIT | WINDOW GENERATING CIRCUIT |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1460621 A
- US 5883878 A

- US 6038209 A

**Non-patent literature cited in the description**

- *ew Book of Optical Disc for the Next Generation,* 07 October 2003, 99-116